# EUROPEAN PATENT APPLICATION

(11) **EP 4 167 209 A1**
(43) Date of publication of application: **19.04.2023**
(21) Application number: 21202064.8
(22) Date of filing: 12.10.2021
(51) Int. Cl.: G08G 1/16, G08G 1/09, G08G 1/01, H04W 4/24, H04W 4/38, H04W 4/44, H04W 4/46

(54) **COOPERATIVE INTELLIGENT TRANSPORT SYSTEM AND METHOD WITH CPM GENERATION CONTROL BASED ON SIGNIFICANCE INDEX AND INFORMATION SIGNIFICANCE LEVEL**

(71) Applicant: DENSO CORPORATION, Kariya-city, Aichi-pref., 448-8661 (JP)
(72) Inventor: LEINMÜLLER, Tim, 85386 Eching (DE); MITTAL, Prachi, 85386 Eching (DE)
(74) Representative: Winter, Brandl - Partnerschaft mbB

(57) **Abstract**

A method, a cooperative intelligent transport system and a computer-implemented system for generating a V2X message based on the significance of information on a communication channel in a cooperative intelligent transport system (C-ITS) using a wireless communication channel for transmitting, receiving, processing and/or discarding a plurality of collective perception messages (CPMs) containing information about on-board sensors and/or objects detected by said on-board sensors within a traffic environment comprise determining a significance index of an object (OSI) and/or a significance index of an entire collective perception message (CSI) based on the individual objects within a CPM, calculating an information significance level (ISL) on the channel based on the CSI values for all received CPMs, determining at least one message generation rule based on the information significance level (ISL), and generating the V2X message based on said at least one message generation rule.

## Description

### Technical Field

The present invention relates to generating a V2X message based on the significance of information on a communication channel in a cooperative intelligent transport system (C-ITS) using a wireless communication channel for transmitting, receiving, processing and/or discarding a plurality of collective perception messages (CPMs) containing information about on-board sensors and/or objects detected by said on-board sensors within a traffic environment.

### Prior Art

A known cooperative intelligent transport system (C-ITS) comprises of stations (e.g., vehicles and/or roadside units) that exchange information with each other using (direct) wireless communication, known as vehicle-to-x, or vehicle-to-everything, (V2X) (direct).

V2X is a generic term for traffic networking, electronic communication of road users with each other in the forms of vehicle-to-vehicle (V2V), vehicle-to-infrastructure (V2I), vehicle-to-network (V2N) and vehicle-to-pedestrian (V2P). Wireless communication can be based on the IEEE 802.11 WLAN standard (the 802.11p extension, and e.g., its European profile ITS-G5) and is specifically termed WLAN-V2X. Alternatively, the wireless communication can be based on the 3GPP standards, specifically termed Cellular-V2X, C-V2X, or sidelink. In V2X, for example, safety and traffic messages, emergency and service data, toll billing and navigation as well as Internet and database content are exchanged. The aims of V2V include notifying drivers of critical and dangerous situations at an early stage, improving the vehicles' awareness of their surroundings, supporting the vehicles' driver assistance systems, and supporting cooperative automated mobility, thereby improving traffic safety and optimizing traffic flow.

The ITS stations (ITS-Ss) in the C-ITS share CAMs (Cooperative Awareness Messages (CAMs) to inform each other about their own position, kinematics, and other data. The ITS stations use DENMs (Decentralized Environmental Notification Messages) to inform each other on dedicated events, such as hard braking or obstacles on the road.

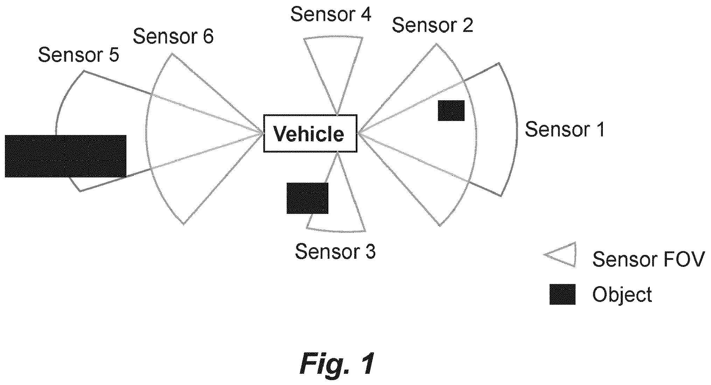

Another V2X message is the Collective Perception Message (CPM) that contains information about on-board sensors, such as field-of-views (FOVs), free-space, and the objects detected within the traffic environment by the on-board sensors of an ITS-S. Fig. 1 shows an example of a vehicle setup comprising a vehicle with sensors 1 to 6 each having a predetermined field-of-view. Exemplary objects are illustrated in the vicinity of the vehicle.

CPMs are sent out periodically and contain information on one or more detected objects, field-of-views and other characteristics of vehicle on-board sensors such as e.g., a radar, a camera and the like. CPMs are composed by the Collective Perception Service (CPS) within the facility layer of the ETSIITS stack, as shown in Fig. 2 illustrating the ETSI ITS-Stack and CPS in a CPS-centric view. CPMs are composed and transmitted as per CPM generation rules of CPS. The current functions of CPS are illustrated in Fig. 3 and will be further referred to in connection with Fig. 4 below.

In C-ITS, a concept of Decentralized Congestion Control (DCC) is employed to handle a congested channel. DCC operates at all layers of the ETSIITS stack.

In the technical field referred to so far, document DE 10 2015 1 057 84 A1 discloses, in a distributed system for detecting and protecting vulnerable road users, the sending of object information about vulnerable road users and controlling the transmission of this information based on object kinematics, novelty, detection possibility by others and the like.

In addition, document EP 3 462 754 A1 presents an apparatus and a method V2X communication arranged to detect if two objects are the same in order to avoid duplicating them in a CPM.

In addition, document WO2021/040352 A1 discloses a method by which a device transmits and receives a CPM in wireless communication system for supporting sidelink, and a device therefor. In this method, it is detected if an object perceived by an ITS-S has already been transmitted by another ITS-S and sending out of such an object is avoided based thereon.

Finally, ETSI TS 102 636-4-2 V1.4.1 (2021-02) (GeoNetworking; Part 4: Geographical addressing and forwarding for point-to-point and point-to-multipoint communications; Sub-part 2: Media-dependent functionalities for ITS-G5) describes a Channel Busy Ratio (CBR) concept in GeoNetworking for ITS-G5.

### Summary of the invention

### Technical Problem

A CPM can contain a large number of detected objects, leading to a relatively large CPM size, so that even at a lower transmission rate, sending out CPMs can result in congestion of the V2X wireless channel. In a congested V2X wireless channel, DCC is executed at every ITS-S (at different layers of the ETSIITS stack). DCC determines a certain channel capacity for the ITS-S, depending on the level of congestion. If the sum of all messages generated by the ITS-Ss exceeds the aforementioned capacity, the DCC access layer functionality (DCC_ACC) drops packets indiscriminately, i.e., without any intelligence about their content or the significance of the information within. Specifically for CPM, this means a packet with significant information (e.g., objects with high relevance to the safety of an ITS-S) may be dropped. While determining the channel capacity by the DCC also limits the channel budget of the ITS-S for CPMs, an ITS-S cannot determine how many CPMs are on the channel and how significant its own CPM information is compared to the CPM information from other stations. Currently, there is no mechanism for an ITS-S to compare to adapt the generation of CPMs in accordance with a significance level of CPMs on the channel.

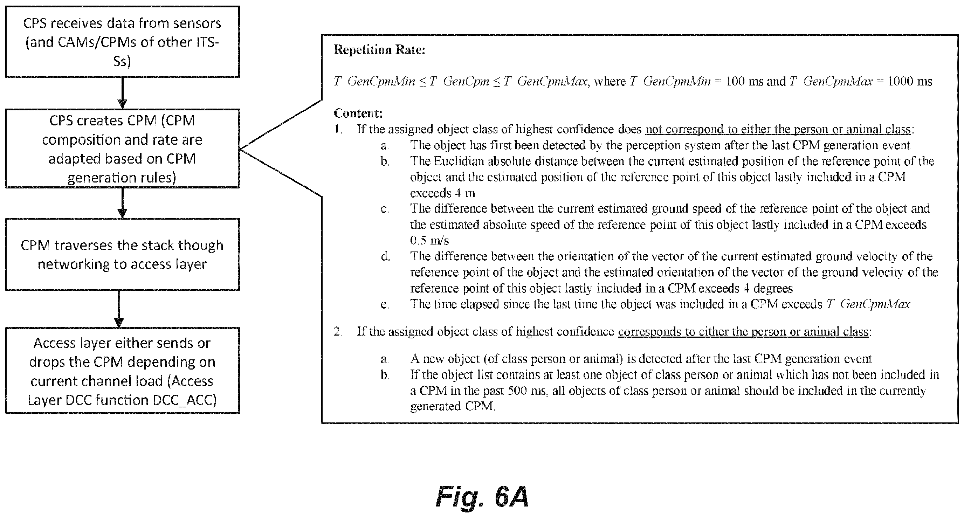

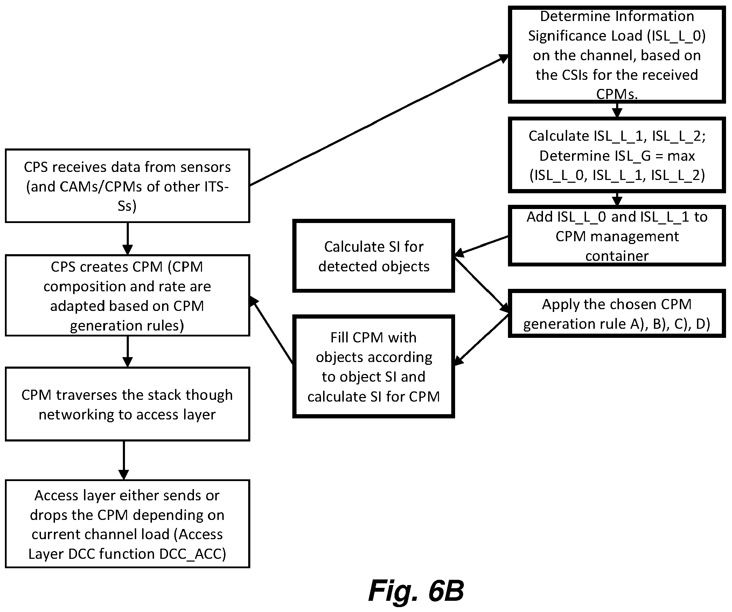

The interlinking of CPM transmission and DCC is shown in Fig. 6.

It is an object of the present invention to provide a method, a cooperative intelligent transport system and a computer-implemented system capable of adapting the generation of CPMs in accordance with a significance level of CPMs on the channel and ensuring that, specifically for CPM and in a congested V2X wireless channel, packets including significant information are safely transmitted and prevented from being dropped.

### Solution to the Problem

This object is accomplished by the subject matters of claims 1, 15 and 16. Further aspects of the invention are defined in the subclaims.

The inventors of this invention conceived an object and CPM significance value concept using a method for exchanging information in a cooperative intelligent transport system between stations in the C-ITS that uses a wireless communication channel. The exchanging of information comprises transmitting, receiving, processing and/or discarding a CPM containing information about on-board sensors and/or objects detected by said on-board sensors within a traffic environment. The method comprises the steps of detecting a plurality of objects present within a FOV of at least one sensor provided at a respective station or included in a shared message received from another station as being present in the vicinity of the station, obtaining object data of each detected object from said at least one sensor and/or said shared message, filling a CPM with object data of the objects, calculating a collective perception message significance index (CSI; also termed CPM_SI) for each CPM filled with object data of the objects, determining available channel resources of said wireless communication channel, and transmitting CPMs in accordance with the available channel resources starting with a CPM with the highest CSI. In this method, the filling of the CPM with object data of the objects is, as a non-limiting example, based on the calculation of an object significance index (OSI) for each detected object based on said object data, and filling a CPM with object data of the objects in accordance with their calculated object significance index. Then, the CSI is calculated by taking an average of OSIs of all objects within the CPM. With this concept, it is possible to assess the significance of information within an individual CPM (with the help of OSI and CSI parameters), but not for all the CPM information available on the channel at one time so that an overarching view of the entire system from the CPM information significance point of view is missing.

The inventors of this invention further conceived a CPM information significance value concept using a method for calculating a collective perception message (CPM) information significance level (ISL) in a C-ITS using a wireless communication channel for transmitting, receiving, processing and/or discarding a plurality of CPMs containing information about on-board sensors and/or objects detected by said on-board sensors within a traffic environment, including calculating a CSI value for each CPM filled with object data of the objects detected within a FOV of at least one sensor provided at an intelligent transport system station (ITS-S) or included in a shared message received from another ITS-S as being present in the communication range of the ITS-S, calculating the ISL on the channel based on the CSI values for all received CPMs, and sharing the calculated ISL with other ITS-Ss. The CPM information significance level concept more specifically proposes to calculate an information significance level index, termed ISL, to represent average significance of all CPMs on a channel in a certain time. It also proposes to derive this index for a 2-hop radius termed as global ISL.

The present invention builds on and further develops the above object and CPM significance value and the CPM information significance value concepts, providing a mechanism for an ITS-S to adapt the generation of CPMs in accordance with the significance level of CPMs on the channel. Such mechanism may e.g., including to reduce the rate of own CPMs of the ITS-S if their significance is lower than the significance of another station's CPMs.

According to a first aspect of the present invention, a method is provided for generating a V2X message based on the significance of information on a communication channel in a cooperative intelligent transport system (C-ITS) using a wireless communication channel for transmitting, receiving, processing and/or discarding a plurality of collective perception messages (CPMs) containing information about on-board sensors and/or objects detected by said on-board sensors within a traffic environment. The method comprises the steps of determining a significance index of an entire collective perception message (CSI) based on the individual objects within a CPM, calculating an information significance level (ISL) on the channel based on the CSI values for all received CPMs, determining at least one message generation rule based on the information significance level (ISL), and generating the V2X message based on said at least one message generation rule. It is noted that the CSI may be calculated based on individual objects without being based directly on OSI itself. However, OSI can be reflected, or be determined and referred to, to calculate the CSI.

In case of a congested channel, according to the first aspect as described above, a decentralized management of CPM generation is employed which is configured to adapt the CPM generation and transmission in every ITS-S based on the global ISL (ISL_G) on the channel. For example, if an ITS-S is sending very high significance CPMs, other ITS-Ss are configured adjust their CPM generation (composition, timing, and rate) and/or transmission to free-up more bandwidth by using the information significance level ISL for controlling the generation of CPMs (including at least rules for composition and repetition rate.

According to a second aspect of the present invention, which depends on the first aspect, said at least one message generation rule determined based on the information significance level (ISL) dictates the generation rate and/or composition of a message and includes at least one of an implicit rate-based rule, an explicit rate-based rule, a priority-based rule, a staggered rate-based rule, and a combination of such rules. As used herein, "implicit rate-based" means that the rule is not directly adjusting the message generation rate, but indirectly, e.g. by postponing generation of a message until a certain criterion is met, and this criterion is known to be met over time; "explicit rate-based means" that the rule directly determines the generation rate of a message; "priority-based" means that the rule creates messages taking into account the significance of the to be included information, leaving out less significant information; and "staggered rate" means creating different messages with different repetition rates.

According to a third aspect of the present invention, which depends on the second aspect, for said implicit rate-based rule, said method is arranged to transmit a CPM if its significance index (CSI) is higher than the ISL or transmit a CPM regardless of its CSI if a message generation timer is expired.

According to a fourth aspect of the present invention, which depends on the second aspect, wherein for said explicit rate-based rule, said method is arranged to transmit a CPM with a generation rate determined based on its CSI, channel information significance level (ISL), and the congestion level of the channel.

According to a fifth aspect of the present invention, which depends on the second aspect, for said priority-based rule, said method is arranged to compose a CPM by including detected objects with their respective OSIs in a way that the significance index (CSI) of the whole message is above the ISL.

According to a sixth aspect of the present invention, which depends on the second aspect, for said staggered-based rule, said method is arranged to compose multiple streams of CPMs with respective generation rates determined based on their CSIs, channel information significance level (ISL), and the congestion level of the channel.

According to a seventh aspect of the present invention, which depends on the second aspect, for said staggered rate-based rule, said method is arranged to transmit and receive a V2X message on different communication channels and/or on different communication media.

According to an eighth aspect of the present invention, which depends on any of the first to seventh aspects, the step of determining a significance index (SI) of an object (OSI) includes detecting a plurality of objects present within a field of view (FOV) of at least one sensor provided at a respective intelligent transport system station (ITS-S) or included in a shared message received from another intelligent transport system station (ITS-S) as being present in the communication range of the station; obtaining object data of each detected object from said at least one sensor and/or said shared message; and calculating the object significance index (OSI) for each detected object based on said object data.

According to a ninth aspect of the present invention, which depends on the eighth aspect, the step of determining the significance index of an entire collective perception message (CSI) includes filling a collective perception message (CPM) with the objects in accordance with their calculated object significance index; and calculating a collective perception message significance index (CSI) for each collective perception message (CPM) filled with objects.

According to a tenth aspect of the present invention, which depends on any of the first to ninth aspects, the step of calculating the information significance level (ISL) comprises determining a local information significance level (ISL_L_0) on the channel from the CSI values for all received CPMs as a local zero-hop value by averaging the CSI values of all received CPMs within a predetermined time interval.

According to an eleventh aspect of the present invention, which depends on the tenth aspect, first and second hop information significance levels (ISL_L_1, ISL_L2) are calculated, wherein the first hop information significance level (ISL_L_1) is the highest received value calculated in a single-hop radius within the predetermined time interval from the local information significance level (ISL_L_0) and the second hop information significance level (ISL_L_2) is the highest received value calculated in a two-hop radius within the predetermined time interval from the first hop information significance level (ISL_L_1).

According to a twelfth aspect of the present invention, which depends on the eleventh aspect, a global information significance level (ISL_G) is determined as ISL_G = max (ISL_L_0, ISL_L_1, ISL_L_2).

According to a thirteenth aspect of the present invention, which depends on any of the first to twelfth aspects, the ITS-S is a vehicle or a roadside unit (RSU).

According to a fourteenth aspect of the present invention, which depends on any of the first to thirteenth aspects, the wireless communication is direct vehicle-to-x (V2X) communication.

According to a fifteenth aspect of the present invention, a cooperative intelligent transport system is provided for generating a V2X message based on the significance of information on a communication channel in a cooperative intelligent transport system (C-ITS) using a wireless communication channel for transmitting, receiving, processing and/or discarding a plurality of collective perception messages (CPMs) containing information about on-board sensors and/or objects detected by said on-board sensors within a traffic environment. The cooperative intelligent transport system comprises a calculation unit arranged to calculate a significance index of an object (OSI) and/or a significance index of an entire collective perception message (CSI) based on the individual objects within a CPM, and calculate an information significance level (ISL) on the channel based on the CSI values for all received CPMs, a determining unit arranged to determine at least one message generation rule based on the information significance level (ISL), and a generating unit arranged to generate the V2X message based on said at least one message generation rule.

According to a sixteenth aspect of the present invention, a computer-implemented system is provided for generating a V2X message based on the significance of information on a communication channel in a cooperative intelligent transport system (C-ITS) using a wireless communication channel for transmitting, receiving, processing and/or discarding a plurality of collective perception messages (CPMs) containing information about on-board sensors and/or objects detected by said on-board sensors within a traffic environment. The computer-implemented system comprises a memory for storing instructions which, when carried out by a processor, cause the processor to perform the steps of determining a significance index of an object (OSI) and/or a significance index of an entire collective perception message (CSI) based on the individual objects within a CPM, calculating an information significance level (ISL) on the channel based on the CSI values for all received CPMs, determining at least one message generation rule based on the information significance level (ISL), and generating the V2X message based on said at least one message generation rule.

It is understood that the above second to fourteenth aspects are likewise applicable to the systems according to the ninth and tenth aspects of the present invention.

The present invention is designed to advantageously provide for a consideration of additional parameters (e.g. detection confidence, location discrepancy etc.) for significance determination, a consideration of any type of objects (not just e.g. VRUs), a consideration of any type of ITS-S (not just e.g. vehicles), a consideration of Area perception Requests (APR), a transmission of the significance parameter itself, a selective aggregation of objects (as opposed to single message per object, or aggregation of all detected objects in one message), and a consideration of a specific V2X message (CPM).

In the above concept, it is understood that in case of limited processing capacity, an arrangement is preferably such that at least received CPMs with a high CSI are processed first.

As further understood, in the above context and without being limited thereto, ITS-Ss at least comprise vehicles and/or roadside units in the traffic environment the afore-mentioned aspects are applicable to.

### Brief Description of the Drawings

Hereinafter, the present invention is described more in detail with reference to the drawings and the corresponding detailed description, wherein:
Fig. 1 illustrates an exemplary vehicle setup in which a vehicle is equipped with sensors each having a predetermined field-of-view and exemplary environmental objects are located in the vicinity of the vehicle;

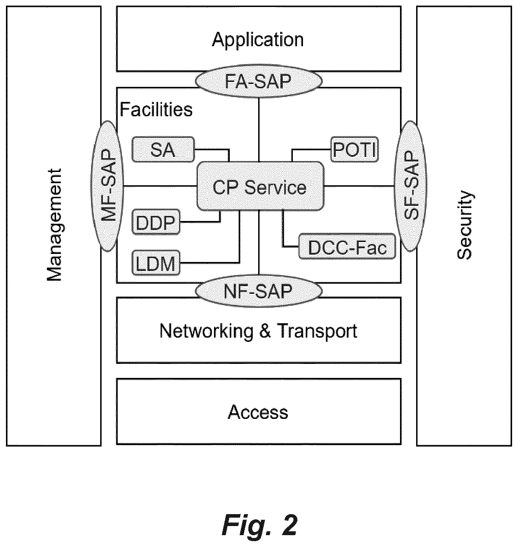

Fig. 2 illustrates the ETSI ITS-Stack and CPS in a CPS-centric view;

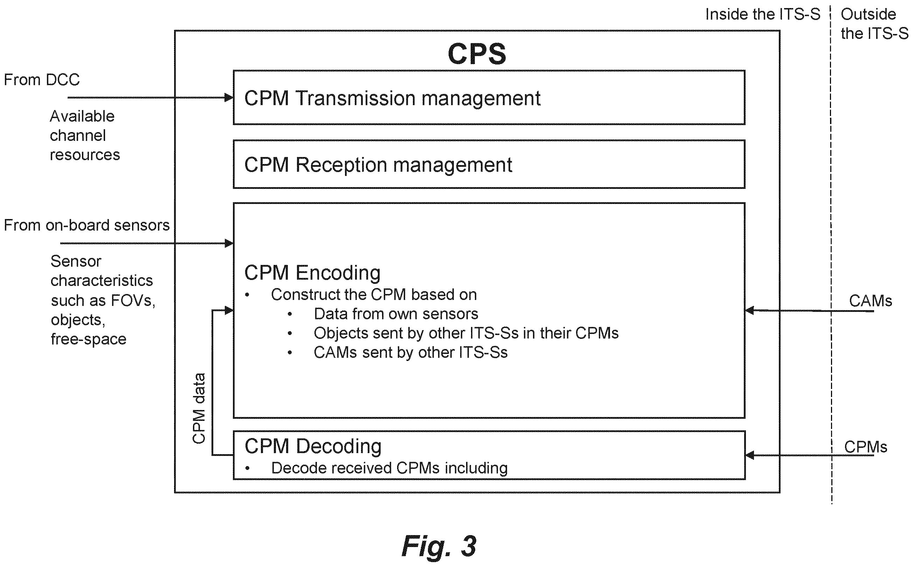

Fig. 3 illustrates functions of the CPS of Fig. 2 as specified in current ETSI standards;

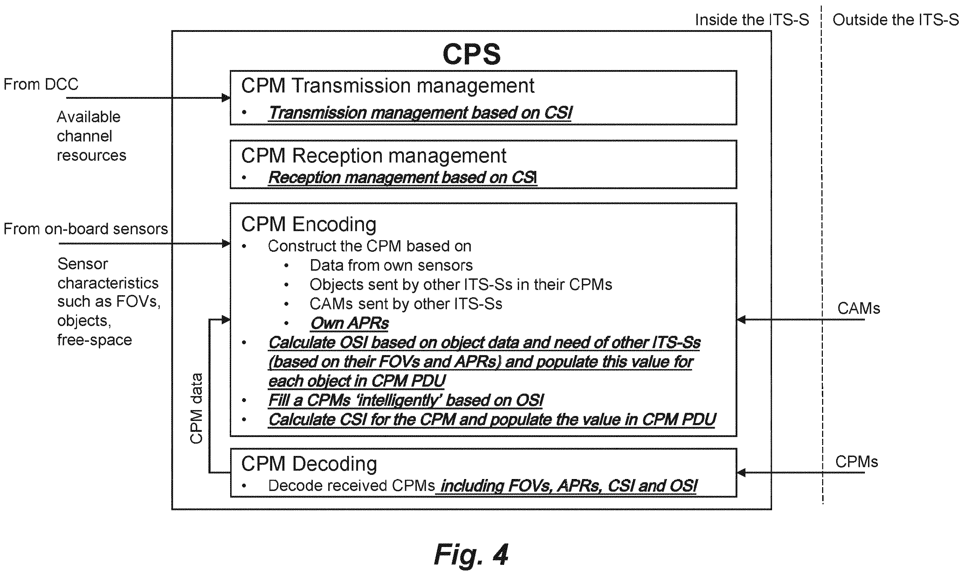

Fig. 4 illustrates, in comparison to Fig. 3, changes to CPS functions introduced by the concept of a significance index introduced into CPM;

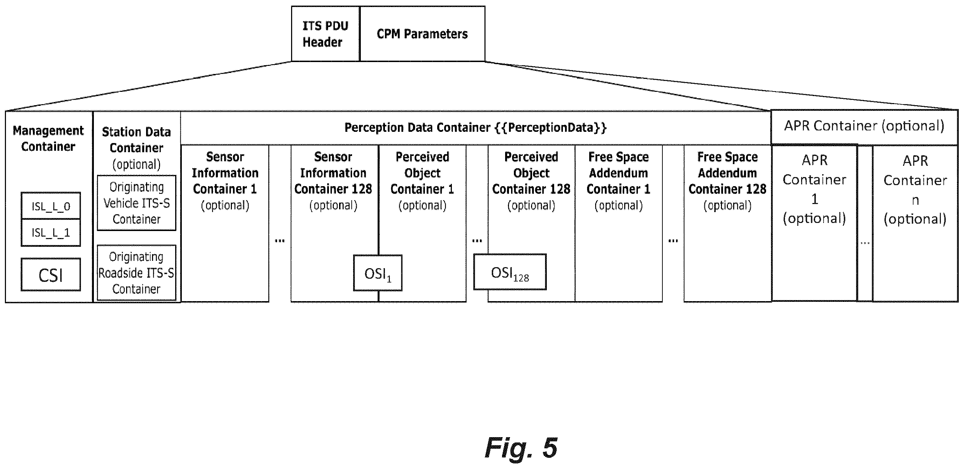

Fig. 5 depicts, in a general overview, where additions as described herein may suitably weave into the current ETSI CPM format.
Fig. 6A and 6B illustrate the interlinking of CPM transmission and DCC executed at an ITS-S at layers of the ETSIITS stack, including the concept of a significance index SI introduced into CPMs, the concept of a significance index level ISL, and a CPM generation control based on SI/ISL according to an embodiment of the present invention;

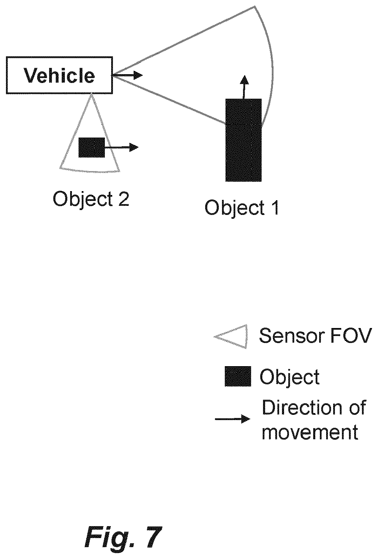

Fig. 7 illustrates an exemplary vehicle setup in the embodiment where object significance is determined based on kinematics and a single vehicle;

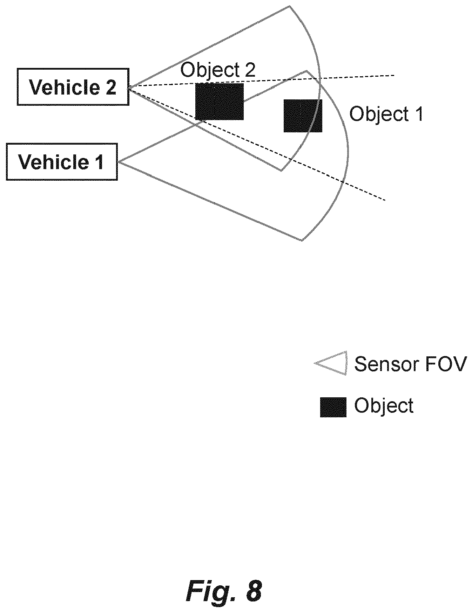

Fig. 8 illustrates another exemplary vehicle setup in the embodiment where object significance is determined based on object occlusion and two vehicles;

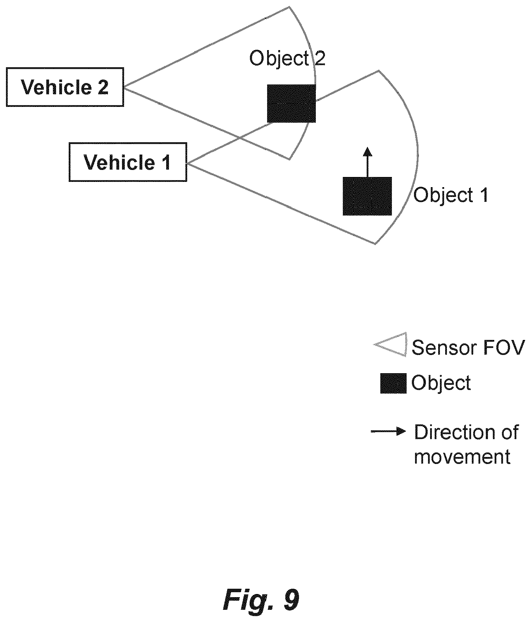

Fig. 9 illustrates another exemplary vehicle setup in the embodiment where object significance is determined based on (partially) outside FOV determination and two vehicles;

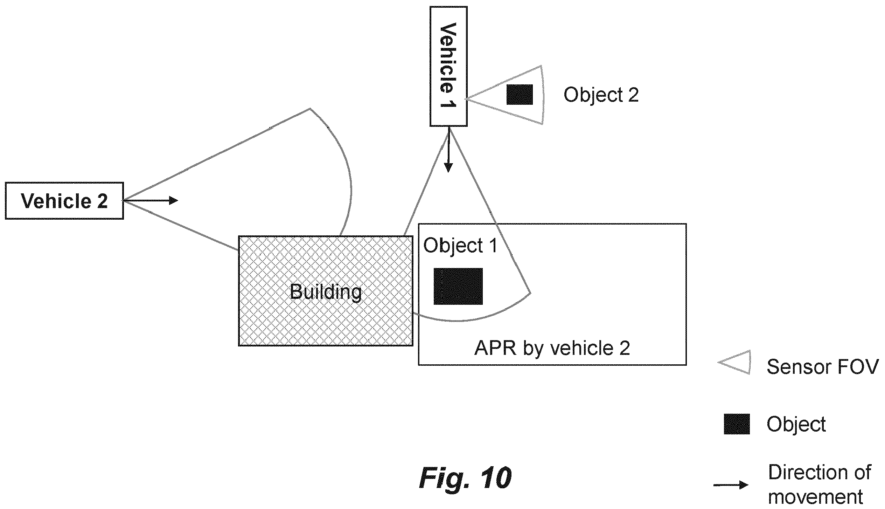

Fig. 10 illustrates another exemplary vehicle setup in the embodiment where object significance is determined for a first vehicle based on an APR area of a second vehicle; and

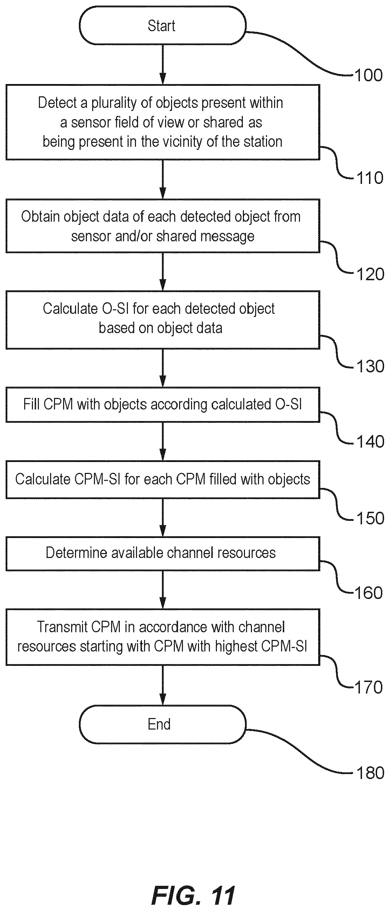

Fig. 11 shows an illustrative flow chart of a process within the concept of the significance index introduced into CPMs.

### Description of the Embodiment

As mentioned at the outset, V2X is a generic term for traffic networking, electronic communication of road users with each other in the forms of vehicle-to-vehicle (V2V), vehicle-to-infrastructure (V2I), vehicle-to-network (V2N) and vehicle-to-pedestrian (V2P). Wireless communication can be based on the IEEE 802.11 WLAN standard (the 802.11p extension, and e.g., its European profile ITS-G5) and is specifically termed WLAN-V2X. Alternatively, the wireless communication can be based on the 3GPP standards, specifically termed Cellular-V2X, C-V2X, or sidelink. In V2X, for example, safety and traffic messages, emergency and service data, toll billing and navigation as well as Internet and database content are exchanged. The aims of V2V include notifying drivers of critical and dangerous situations at an early stage, improving the vehicles' awareness of their surroundings, supporting the vehicles' driver assistance systems, and supporting cooperative automated mobility, thereby improving traffic safety and optimizing traffic flow.

Two alternative access layer technologies for ITS have been defined by the Institute of Electrical and Electronics Engineers (IEEE) and the Third Generation Partnership Project (3GPP), respectively.

The first approach is often referred to as Dedicated Short-Range Communication (DSRC), which supports vehicular ad-hoc connectivity using Wireless Local Area Network (WLAN) technologies standardized as IEEE 802.11p, which is the basis for the European standard ETSI ITS-G5. The second approach is Cellular-based V2X (C-V2X), a proposal by the 3GPP, based on Long-Term Evolution (LTE), also known as LTE-V2X or sidelink.

In this context, cooperative awareness within road traffic means that road users and roadside infrastructure are informed about each other's position, dynamics and attributes. Road users are all kind of users on or near the road that play a role in traffic safety and control, such as cars, trucks, motorcycles, bicycles or even pedestrians and roadside infrastructure equipment including road signs, traffic lights or barriers and gates. The awareness of each other is the basis for several road safety and traffic efficiency applications with many use cases as described in ETSI TR 102 638. It is achieved by regular broadcasting of information among the road users, from vehicle to vehicle (V2V), but also from infrastructure to any road user, V21, I2V or X2X based on wireless networks, called V2X network and as such is part of Intelligent Transport Systems (ITS).

Cooperative safety and traffic efficiency applications require Intelligent Transportation System (ITS) sub-systems (road users, roadside units, etc.) and their ITS-Stations (ITS-Ss) to develop situational awareness that includes the presence and behavior of road users in their vicinity. Vehicle sub-systems and roadside sub-systems develop their situational awareness from their perception sensors and through communication with other surrounding ITS-Ss. The CA basic service EN 302 637-2, is a European Norm (EN) that specifies how an ITS-S can inform others about its associated sub-systems position, dynamics and attributes by sending Cooperative Awareness Messages (CAMs) according to EN 302 637-2.

The Collective Perception service (CP service or CPS) complements the CA basic service. The CPS specification defines how an ITS-S can inform others about the position, dynamics and attributes of neighboring road users, other objects, and free-space detected by local perception sensors. The CPS enables ITS sub-systems to share information about other road users and obstacles that were detected by local perception sensors such as radars, cameras and the like. In that sense, it aims at increasing awareness between ITS sub-systems by mutually contributing information about their perceived objects to the individual knowledge base of the sub-system.

The Collective Perception Message (CPM) enables sharing of information about detected objects by the disseminating ITS sub-system. The message consists of information about the disseminating ITS sub-system, its sensory capabilities and its detected objects. For this purpose, the message provides generic data elements to describe detected objects in the reference frame of the disseminating ITS sub-system. The CPM is transmitted cyclically with adaptive message generation rates to decrease the resulting channel load while focusing on reporting changes in the dynamic road environment.

In particular, draft ETSI Technical Specification ETSI TS 103 324, currently in the form of V0.0.22 draft (2021-05), focuses on the specifications of CPMs transmitted by ITS-Ss participating in the V2X network and the specification of the CPS with trigger conditions for sending CPMs.

As used herein, an object in the context of the CPS is defined as the state space representation of a physically detected object within a sensor's perception range, an object list is defined as a collection of objects temporally aligned to the same timestamp, the Collective Perception (CP) Service is defined as a facility at the ITS-S facilities layer to generate, receive and process CPMs, the Collective Perception Message (CPM) is defined as a CP service PDU (Protocol Data Unit), Collective Perception Message (CPM) data is defined as a partial or complete CPM payload, the Collective Perception (CPM) protocol is defined as the ITS facilities layer protocol for the operation of the CPM transmission and reception, an ITS station is defined as a functional entity specified by the ITS station (ITS-S) reference architecture, an Object confidence is defined as a quantification of the confidence that a detected object actually exists, i.e., has been detected previously and has continuously been detected by a sensor, a Roadside ITS station is defined as an ITS station in a roadside ITS sub-system, a Sensor Measurement is defined as the operation of a sensor based on its working principle to generate a state space representation for detected objects, a State Space Representation is defined as the mathematical description of a detected object consisting of state variables such as distance, speed, object dimensions, etc., and a Vehicle ITS station is defined as an ITS station in a vehicular ITS sub-system. CPU(s) in an ITS-S carry out the respective layer functions, namely application layer, facilities layer, and network and transport layer.

Fig. 2 depicts in more detail the Collective Perception (CP) service within the ITS-S architecture along with the logical interfaces to other layers and entities within the Facilities layer. The CPS is a Facilities layer entity in the ITS-S-S architecture. It interfaces with other entities of the Facilities layer and with ITS applications to collect relevant information for CPM generation and for forwarding received CPM content for further processing.

The entities for the collection of data to generate a CPM are the Device Data Provider (DDP), the Position and Time management (POTI) and the Local Dynamic Map (LDM). For vehicle ITS sub-systems, the DDP is connected with the in-vehicle network and provides the vehicle state information. For roadside ITS sub-systems, the DDP is connected to sensors mounted on the roadside infrastructure such as poles or gantries. The POTI entity provides the position of the ITS-S and time information. The LDM is a database in the ITS-S, which in addition to on-board sensor data is configured to be updated with received data from message such as CAM and CPM. ITS applications retrieve information from the LDM for further processing. The CPS also interfaces with the Service Announcement (SA) Service to indicate an ITS-S's ability to generate CPMs and to provide details about the communication technology/ies used.

Message dissemination-specific information related to the current channel utilization are received by interfacing with the DCC-FAC (Decentralized Congestion Control for Facility Layer) entity and the DCC-Cross entity (located in the Management plane, not shown in Fig.2). The CPS interfaces through the NF-SAP (SAP for Networking-Facility layer interface) with the networking & transport layer (N&T) for exchanging of CPMs with other ITS-Ss, the SF-SAP (SAP for Security-Facility layer interface) with the Security entity to access security services for CPM transmission and CPM reception, the MF-SAP (SAP for Management-Facility layer interface) with the Management entity and the FA-SAP (SAP for Facility-Application layer interface) with the application layer if received CPM data is provided directly to the applications. It is noted that SAP stands for Service Access Point, and that SA stands for Service Announcement.

As shown in Fig. 3, the CPS functions in a respective ITS-S encompass CPM transmission management, CPM reception management, CPM encoding and CPM decoding based on input from the DCC (including e.g. information about available channel resources), from on-board sensors (including e.g. information about sensor characteristics, FOVs, objects, free-space), CAMs and CPMs (from outside the respective ITS-S, e.g. from one or more other ITS-Ss).

Fig. 4 illustrates changes to CPS functions according to the embodiment in comparison to Fig. 3. The changes are marked in underlined bold italics in Fig. 4 and will be referred to in greater detail hereinbelow.

Fig. 5 illustrates a current state of the ETSI CPM format and identifies where the present invention might weave into this format. Current ETSI developments to specify the CPS service are described in a Technical Report describing the CPM format and the CPM generation rules as a baseline for the specification of CPS in ETSI TS 103 324.

As shown in Fig. 5, CPM messages include an ITS (Intelligent Transport Systems) PDU (Protocol Data Unit) header and 4 types of containers: A Management Container, a Station Data Container, a plurality of Sensor Information Containers (SICs) and a plurality of Perceived Object Containers (POCs).

The ITS PDU header includes data elements like a protocol version, a message ID and a Station ID. The Management Container is mandatory and provides basic information about a transmitting vehicle (such as the position thereof). Position information is used by a receiver to reference detected objects. The Station Data Container is optional and includes additional information about the transmitting vehicle (e.g., its speed, heading, or acceleration). In addition, a CPM can include up to 128 SICs to describe the capabilities of sensors embedded in the transmitting vehicle. Finally, the POCs provide information about detected objects (e.g., a distance between the detected object and the transmitting vehicle), a speed and dimensions of an object, and the time at which these measurements were done. A single CPM can include up to 128 POCs.

The CPM generation rules define when a vehicle should generate and transmit a CPM and the information to be included in the CPM. Current ETSI CPM generation rules establish that a vehicle has to check in predetermined intervals if a new CPM should be generated and transmitted. By default, the predetermined interval is set to 100ms although it can be any multiple of 100ms in the range between 100ms and 1000ms. For every predetermined interval, a vehicle should generate a new CPM if it has detected a new object, or if its absolute position has changed by more than a predetermined amount, e.g. 4m, since the last time its data was included in a CPM, or if its absolute speed has changed by more than a predetermined value, e.g. 0.5m/s, since the last time its data was included in a CPM, or if the last time the detected object was included in a CPM was a predetermined period of time, e.g. 1 (or more) seconds, ago. A vehicle includes in a new CPM all new detected objects and those objects that satisfy at least one of the previous conditions. The vehicle still generates a CPM every second even if none of the detected objects satisfy any of the previous conditions. The information about the onboard sensors is included in the CPM only once per second.

According to Fig. 5, as further shown, the concept of a significance index introduced into CPMs might weave into the pending ETSI CPM format at the Management Container (cf. a box marked CSI ("CPM-SI")), at the POCs (cf. boxes marked OSI ("O-SI") with indices 1 to 128), and by optionally adding new APR Containers 1 to n, cf. the right-hand side of Fig. 5, and an Information Significance Level (ISL) on the channel and to be shared with other ITS-Ss according to the embodiment and the present invention, calculated using the CPM Significance Index (CSI), might weave into this format at the Management Container (cf. boxes marked ISL-L-0 and ISL_L_1).

In the above context, Fig. 6A and 6B illustrate the interlinking of CPM transmission and DCC in an ITS-S at layers of the ETSIITS stack including the concept of a significance index introduced into CPMs according to the embodiment.

According to Fig. 6A, while e.g. assuming a congested V2X channel, the CPS receives data from own sensors (and CAMs/CPMs of other ITS-Ss) and creates the CPM in accordance with predefined CPM generation rules. Fig. 6A also shows exemplary CPM generation rules with respect to a repetition rate and content, as explained in e.g. ETSI Technical Report 103 562 V2.1.1 (2019-12), cf. 4.3.4.2 "Perceived Object Container Inclusion Management", and as incorporated herein by reference. A created CPM then traverses the stack through the networking layer to the access layer, and the access layer then either sends or drops the CPM depending on a current channel load.

Fig. 6B illustrates where the concept of CSI, the concept of ISL and further the CPM generation control based on SI/ISL according to the present invention interlink with the process shown in Fig. 6A.

After the CPS has received data from sensors and/or CAMs/CPMs of other ITS-Ss, an ISL (Information Significance Load, which may be also termed an Information Significance Level) ISL_L_0 on the channel is determined based on the CSIs for the received CPMs, first and second level hops ISL_L_1, ISL_L_2 are determined and a global ISL (ISL_G) is determined as ISL_G = max (ISL_L_0, ISL_L_1, ISL_L_2), and ISL_L_= and ISL_L_1 are added to the CPM management container. Then, an SI for detected objects (object significance index, OSI) is calculated, a chosen CPM generation rule is applied, the CPM is filled with object data of the objects according to the OSI, and the SI for the CPM is calculated. The CPS then creates a CPM, wherein the CPM size and rate are adapted based on channel congestion information from DCC. The CPM traverses the stack through the networking layer to the access layer, and the access layer either sends or drops the CPM depending on the current channel load (Access Layer DCC function DCC-ACC).

According to the present embodiment, the CPM generation rules (alternatives) at every ITS-S that are chosen in Fig. 6B encompass at least the following rules A to D.

An implicit rate-based rule A in which a CPM is created at a time T_GenCpm but only if its CSI is higher than the present ISL_G. If a max time interval has elapsed (T_GenCpmMax), then the CPM is created regardless of CSI. It is noted that a delay in sending a CPM will, thus, increase a "time since last update" of object(s) and hence increase the OSI(s).

An explicit rate-based rule B in which an optimum generation rate (and the corresponding *T_GenCpm)* is calculated based on the DCC state, the ISL_G, and the CSI of the to be generated CPM at a point in time using e.g., either a predefined formula or a look-up table.

A priority based rule C in which the filling of a CPM is started with most significant objects until the CSI falls below the ISL_G, i.e. the CSI is kept higher than the ISL_G by not bringing lower OSI objects into the CPM and sending it at the time *T_GenCPM.*

A staggered rate-based rule D in which two (or more) CPMs are created and one with a high CSI with higher frequency and one with a lower CSI with a lower frequency one, calculated based on DCC state, ISL_G, and CSI of the to be generated CPM at a point in time (either using a formula or a look-up table, are sent. In this way, the most significant objects (high OSI) are sent out right now and more often, and the others later, if at all due to the minimum rate.

An example for rule D includes creating a first CPM as per priority-based rule (i.e. CSI > ISL_G) and sending it at rate (1/T_GenCpm -1) Hz, and creating second CPM with all remaining objects and sending it at rate of 1Hz.

As used herein, "implicit rate-based" means that the rule is not directly adjusting the message generation rate, but indirectly, e.g. by postponing generation of a message until a certain criterion is met, and this criterion is known to be met over time; "explicit rate-based means" that the rule directly determines the generation rate of a message; "priority-based" means that the rule creates messages taking into account the significance of the to be included information, leaving out less significant information; and "staggered rate" means creating different messages with different repetition rates.

Furthermore, the CPMs with different CSIs can be sent out on different radio channels (MCO concept - Multi Channel Operation) or even different communication media.

Examples here for include, e.g., creating a first CPM as per priority-based rule (i.e. CSI > ISL_G) and sending it at rate (1/T_GenCpm -1) Hz on a Control Channel (CCH), and creating second CPM with all remaining objects and sending it at rate of 1Hz on a Service channel (SCH1); or creating a first CPM as per priority-based rule (i.e. CSI > ISL_G) and sending it at rate (1/T_GenCpm -1) Hz on the Control Channel (CCH) and creating a second CPM with all remaining objects and send it at rate of 1Hz over a cellular network to a cloud or a mobile-edge based service provider (for processing and re-distribution to other ITS-Ss).

In the above respect, the parameter T_GenCPM represents the currently valid upper limit for the time elapsed between consecutive CPM generation events.

The present invention is based on and has a plurality of aspects, an overview of which is given in the following:
Within the context of CPS functions, which according to Fig. 3 encompass CPM transmission management, CPM reception management, CPM encoding and CPM decoding, the existing CPS functions are expanded and/or adapted by incorporating a significance index (SI).

Concomitantly with the incorporation of the SI, which as such serves to avoid loss of significant information, a significance of a CPM is based on the significance index (SI) of the object information within for the CPS to adaptively include (depending on the current V2X channel load) only the most significant objects (e.g., from a safety point of view) within a CPM.

Here, it is conceivable that other ITS-Ss than an (own) host ITS-S can influence the SI calculation of the host ITS-S by sending an Area Perception Request (APR), which is a request for an area for which they want to receive object information, and further other applications within the C-ITS system, such as on-demand CPM transmission, are conceivable as well.

Preferably, the SI is calculated by the CPS based on data obtained at a host ITS-S about a detected object, wherein such data include at least one of kinematics, novelty, time elapsed since last update, classification, confidence of detection, and/or based on the need of other ITS-Ss.

As used herein, kinematics includes at least one of position, speed, and acceleration, without being limited thereto, i.e., parameters that are suitable to indicate the likelihood for an object to be a safety hazard for one or more road user(s). For example, in a case where one vehicle is moving slow and another vehicle is moving fast and a likelihood of the faster vehicle being a safety hazard is determined, then the higher the likelihood of being a safety hazard is, the higher is the significance thereof.

As used herein, novelty means an object not having been detected previously. A novel object increases the significance. Time elapsed since last update relates to an object having not been reported for a predetermined time. The longer the time elapsed is, the higher is the significance thereof. Classification generally refers to object types and takes into account higher 'value' objects such as vulnerable road users (VRUs). Accordingly, the significance is determined to be higher for classes including such higher value objects. Likewise for a confidence of detection (value), the higher the confidence (value) is, the higher is the significance thereof.

As for the need of other ITS-Ss, an object with kinematics (e.g., position, speed, acceleration), especially in relation to one or more road user(s) (vicinity, collision path, and so on), is preferably taken into account when determining the object significance. Fig. 7 shows an illustrative example where, when a vehicle ITS-S detects a first object (Object 1) and a second object (Object 2), the first object is considered more significant than the second object due a potential collision path with the first object but not with the second object.

Also, with respect to the need of other ITS-Ss, objects that are difficult or impossible to be detected by a neighboring ITS-S, e.g., occluded objects that are partially or fully hidden based on the positions of the other known objects and the FOVs of the sensors of the known neighboring vehicles are also preferably taken into account when determining the object significance. Fig. 8 shows an illustrative example where in a traffic environment including a first and a second vehicle and a first and a second object, the first object (Object 1) is considered more significant than the second object (Object 2) by the first vehicle (Vehicle 1) because for the FOV of the sensor of the second vehicle, the first object is occluded by the second object.

Objects that are difficult or impossible to detect further include objects on the boundary or completely outside of the FOVs of the sensors of the neighboring ITS-S and objects that have been detected by other ITS-Ss with less confidence than that of the host ITS-S, without being limited thereto. Fig. 9 shows an illustrative example where in a traffic environment including a first and a second vehicle and a first and a second object, the first object (Object 1) is considered more significant than the second object (Object 2) by the first vehicle (Vehicle 1) because the first object is completely outside the FOV of the second vehicle (Vehicle 2).

Also, with respect to the need of other ITS-Ss, objects whose detected location differs between different ITS-S, including a vehicular ITS-S type object whose location in its CAM differs from that detected by the sensors of another ITS-S, are preferably taken into account when determining the object significance.

With further respect to the need of other ITS-Ss, a number of area perception requests (APRs) by other ITS-Ss of an area in which an object detected by a host ITS-S is located, are preferably taken into account when determining the object significance. Here, as non-limiting examples, the request for this area may be explicitly sent out by a neighboring ITS-S, and/or the request may be part of an optional container within the CPM where the sending ITS-S can indicate the area for which it would like to receive object information. Fig. 10 shows an illustrative example where in a traffic environment including a first and a second vehicle, a first and a second object and e.g., a building, the first object (Object 1) is deemed more significant than the second object (Object 2) by the first vehicle (Vehicle 1) because the first object falls in an area perception request (APR) area of the second vehicle (Vehicle 2).

Fig. 11 shows an illustrative flow chart of an exemplary process for calculating and transmitting the significance index (SI) at the CPS.

In a step 110 in which a plurality of objects present within a field of view (FOV) of at least one sensor provided at a respective station or included in a shared message received from another station as being present in the vicinity of the station are detected.

Then, in a step 120, object data (kinematics and trajectory, if applicable) of each detected object from said at least one sensor, and/or said shared message, including objects detected via CAMs, is obtained.

It is noted that the shared message includes CPMs obtained from other ITS-Ss, including the FOVs and/or APRs from these stations. It is further noted that in case of limited processing capacity and where CPMs obtained from other ITS-Ss include a CSI, the arrangement is preferably such that CPMs with a high CSI (or CPM-SI) are processed first.

In a next step 130, an OSI for each detected object is calculated based on the object data. Here, the calculation is performed based on the various factors described above. As a non-limiting example, a simple calculation model includes adding the values for different factors and normalizing the result to 1 to 10 in order to obtain an SI value.

Then, in step 140, a CPM is filled with object data of the objects in accordance with their calculated OSI and at least one of the CPM generation rules A to D described above is applied to generate the CPM. As a non-limiting example, a simple filling model starts the filling with a most significant object and continues with lesser significant objects, respectively, as CPM construction rules about the CPM size permit. In other words, this step calculates and populates the CSI for each CPM. A non-limiting simple model example includes taking the average of OSIs of all the objects within. It is noted that the OSI and the CSI may both be integer type parameters with values from e.g., 1 to 10. For clarity, CSI is an abbreviated form of and may be synonymously termed CPM-SI.

It is noted that calculating the OSI and filling a CPM with object data of the objects in accordance with their OSI, as illustrated in steps 130 and 140, is an exemplary way to calculate the CSI. Other ways of calculating the CSI are conceivable and the way disclosed as a modification herein imposes no limitation on how the priority of CPMs is determined.

In a step 150, a CSI for each CPM filled with object data of the objects is then calculated.

A following step 160 determines available channel resources of the wireless communication channel.

Finally, in a step 170, CPMs are transmitted in accordance with the available channel resources starting with a CPM with the highest CSI. Preferably, in case of a congested channel, the CPMs are sent out starting with the highest CSI until the available channel resources (as decided upon by the DCC entity) are exhausted.

In this process, thanks to CSI, CPMs are transmitted in accordance with the available channel resources starting with a CPM with the highest CSI. Accordingly, the CSI reduces the possibility that important CPMs are discarded.

According to an embodiment of the present invention, the above described CPM Significance Index (CSI) concept of CPM is used to calculate an "Information Significance Level (ISL)" on the channel and share it with other ITS-Ss.

In more detail, a local ISL ISL_L_0 on the channel is calculated. ISL_L_0 is an index based on the CSIs of the received CPMs within one time interval. For a non-limiting example, the time interval may have a default value of 1 second, and a simplest model for calculating ISL_L_0 may reside in averaging the CSI values of all received CPMs within said one predetermined time interval.

Preferably, the calculated ISL value(s) are included within the management container of CPM in 2 Bytes. Here, an exemplary model for including the calculated ISL value(s) includes sending the locally calculated ISL, or "level 0 hop", ISL_L_0 in said one time interval (default length 1 second, value 1-16, size 1 byte), calculating the maximum of received ISL_L_0s in one time interval (default length 1 second) and sending this "level 1 hop" ISL_L_1 (value 1-16, size 1 byte), and calculating the maximum of received ISL_L_1s in one time interval and not sending this "level 2 hop" ISL_L_2. At this point, a global ISL (ISL_G) is then calculated as ISL_G = max (ISL_L_0, ISL_L_1, ISL_L_2).

As used herein, "zero-hop" includes all ITS-Ss within a direction or direct radio communication range of an ITS-S. Likewise, "one-hop" then includes all ITS-Ss in the radio communication range of the zero-hop ITS-Ss in addition, and "two-hop" then includes all ITS-Ss in the radio communication range of the zero-hop ITS-Ss and the one-hop ITS-Ss in addition.

As described above, the present invention realizes a multi-hop, or at least 2-hop, ISL determination based on sending ISLs out to and receiving ISLs from neighboring ITS-Ss, wherein, from the viewpoint of the ego ITS-S, the calculated local ISL is disseminated to neighboring ITS-S as the ISL_L_0 hop, the ISL_L_1 hop is the maximum ISL_R_0 hop value received from a neighboring ITS-S in a given time interval, and the ISL_L_2 hop is the maximum ISL_R_1 hop value received from a neighboring ITS-S in a given time interval.

R and L hop values as used herein stem from the multi-hop transmission and reception environment between IST-Ss the ISL is determined in. R and L specifies the whereto and wherefrom from the viewpoint of a given ITS-S.

For further explanation, in the multi-hop transmission and reception environment between IST-Ss, for example, L_0 hop is a value calculated locally (at the ego ITS-S) which is disseminated from the ego ITS-S to a neighboring ITS-S as R_0 hop, i.e. L_0 hop becomes R_0 hop when disseminated from the ego ITS-S to a neighboring ITS-S and becomes L_1 hop at the receiving neighboring ITS-S. Likewise, other ITS-S disseminate their L_0 hops as R_0 hops which become L_1 hops at the ego station. If an L_1 hop, e.g. the maximum of received L_0s from other ITS-Ss, is disseminated as R_1 hop from the ego ITS-S to a neighboring ITS-S, it becomes L_2 hop at the receiving neighboring ITS-S, and so on.

In the above context, the multi-hop transmission and reception approach is related to the calculation of the Global Channel Busy Ration CBR_G as described in ETSI Technical Specification ETSI TS 102 636-4-2 V1.2.1 (2020-04), chapter 5.3 "Calculation of the global channel busy ratio CBR_G", which is incorporated herein by reference for a fuller understanding of the ISL calculations according to the present invention:

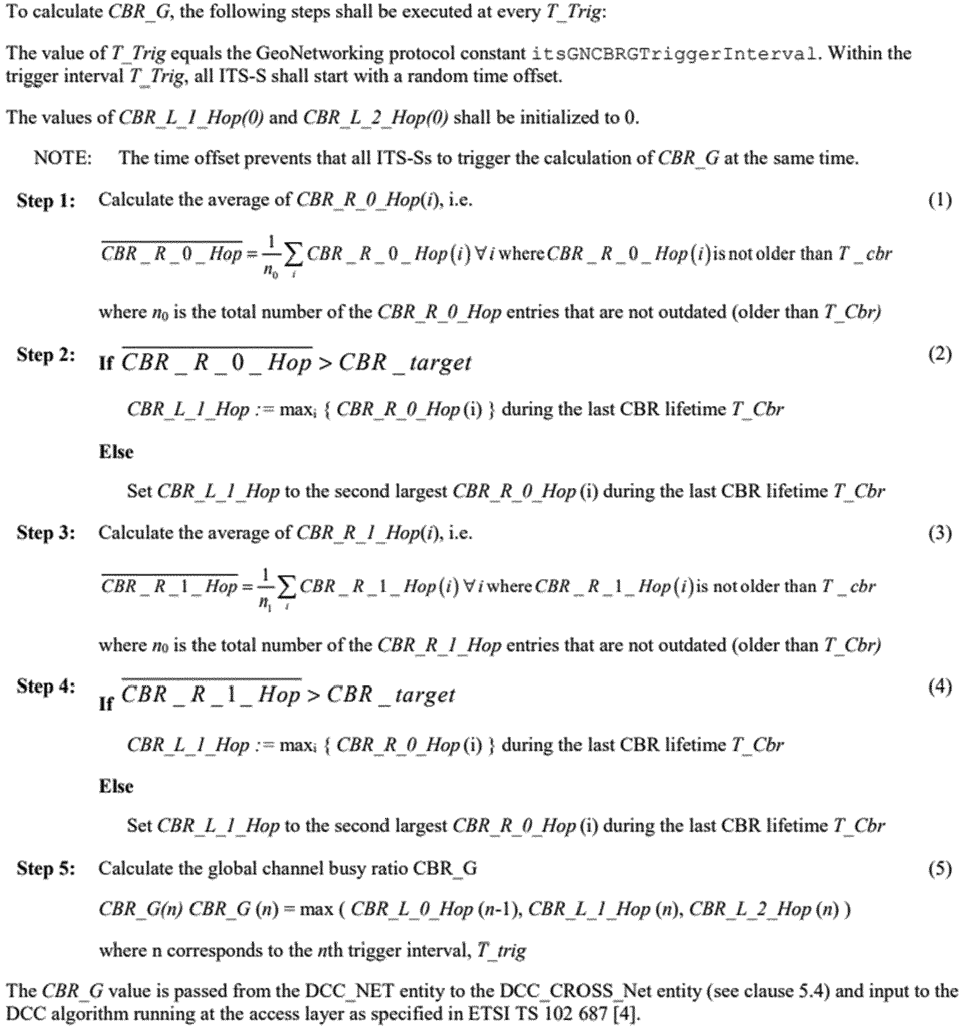

The technical effect of the CPM generation control based on SI/ISL as described herein resides in that a decentralized management of CPM generation is employed in case of a congested channel to adapt the CPM generation and transmission in every ITS-S in a way that other ITS-Ss are caused to adjust their own CPM generation and/or transmission to free-up more bandwidth if one ITS-S is sending very high significance CPMs. This also involves a further reduction of the V2X wireless channel load. Since the channel budget of an ITS-S is limited by the channel capacity determined by the DCC depending on the level of congestion, the ITS-S, being capable of determining how significant its own information is compared to that from other stations, can optimize CPM prioritization and mitigate redundant information, reduce the CPM size, free up capacity with respect to particularly a (potentially or actually) congested V2X wireless channel and better prevent packets with significant information about highly relevant objects from being dropped.

The present invention has been described using one preferred embodiment thereof. It is, however, understood that the present invention is not limited to the specifically described embodiment and can include and cover additional aspects, configurations and modifications without departing from the scope of the subject matter described and claimed.

Such additional aspects, configurations and modifications may, for example, include a method, a computing program, and equipment for generating a V2X message based on the significance of the information on the communication channel. The significance may be indicated by the significance index (SI) of object(s) (OSI) and/or the whole CPM (CSI). The significance may be indicated for the whole channel by the Information Significance Level (ISL). The generation of the above V2X message determined by generation rules' at least includes message composition and repetition rate.

Such additional aspects, configurations and modifications may, for example, include a method, a computing program, and equipment for determining the message generation rule based on ISL. Rules may, for example, include an implicit rate-based rule, an explicit rate-based rule, a priority-based rule, a staggered rate-based rule, and a combination of thereof.

Such additional aspects, configurations and modifications may, for example, further include a method, a computing program, and equipment for encoding and decoding, transmitting and receiving, as part of V2X message, the ISL for the communication channel based on the significance of the transmitted V2X messages using a local "zero hop" value and a single hop radius.

Still further aspects, configurations and modifications may, for example, relate to a method, a computing program, and an equipment for composing, transmitting, receiving, and decoding an ITS message or part of an ITS message containing information about the geographical area which is only partially or not at all detected by the sensors of the sender ITS-S, and/or a criticality of the above area for the sender ITS-S, and/or a method, a computing program, and an equipment for deciding to transmit a CPM based on its SI and the available channel resources.

In general, embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of this invention may be implemented by computer software executable by a data processor of a system entity, such as in the processor entity, or by hardware, or by a combination of software and hardware. Further in this regard it should be noted that any blocks of logic flow shown in the figures may represent program steps, or interconnected logic circuits, blocks and functions, or a combination of program steps and logic circuits, blocks and functions. The software may be stored on physical media such as memory chips, or memory blocks implemented within the processor, magnetic media such as hard disk or floppy disks, and optical media such as for example DVD and the data variants thereof, CD.

Memory may be of any type suitable to the local technical environment and may be implemented using any suitable data storage technology, such as semiconductor-based memory devices, magnetic memory devices and systems, optical memory devices and systems, fixed memory and removable memory. Data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Electronic Design Automation (EDA) programs and tools automatically route conductors and locate components on a semiconductor chip using well established rules of design as well as libraries of pre-stored design modules. Once the design for a semiconductor circuit has been completed, the resultant design, in a standardized electronic format may be transmitted to a semiconductor fabrication facility or "fab" for fabrication.

The description so far has provided by way of an exemplary and non-limiting example a full and informative description of the exemplary embodiment of this invention. However, various modifications and adaptations may become apparent to those skilled in the relevant art in view of the foregoing description, when read in conjunction with the accompanying drawings and the appended claims. It is understood that all such and similar modifications of the teachings of this invention will still fall within the scope of this invention as defined in the appended claims.

With the present invention as described above, a method, a cooperative intelligent transport system and a computer-implemented system for generating a V2X message based on the significance of information on a communication channel in a cooperative intelligent transport system (C-ITS) using a wireless communication channel for transmitting, receiving, processing and/or discarding a plurality of collective perception messages (CPMs) containing information about on-board sensors and/or objects detected by said on-board sensors within a traffic environment comprise determining a significance index of an object (OSI) and/or a significance index of an entire collective perception message (CSI) based on the individual objects within a CPM, calculating an information significance level (ISL) on the channel based on the CSI values for all received CPMs, determining at least one message generation rule based on the information significance level (ISL), and generating the V2X message based on said at least one message generation rule.

## Claims

1. A method for generating a V2X message based on the significance of information on a communication channel in a cooperative intelligent transport system (C-ITS) using a wireless communication channel for transmitting, receiving, processing and/or discarding a plurality of collective perception messages (CPMs) containing information about on-board sensors and/or objects detected by said on-board sensors within a traffic environment,
said method comprising the steps of:
determining a significance index of an entire collective perception message (CSI) based on the individual objects within a CPM;
calculating an information significance level (ISL) on the channel based on the CSI values for all received CPMs;
determining at least one message generation rule based on the information significance level (ISL); and
generating the V2X message based on said at least one message generation rule.

2. A method according to claim 1, wherein said at least one message generation rule determined based on the information significance level (ISL) dictates the generation rate and/or composition of a message and includes at least one of an implicit rate-based rule, an explicit rate-based rule, a priority-based rule, a staggered rate-based rule, and a combination of such rules.

3. A method according to claim 2, wherein for said implicit rate-based rule, said method is arranged to transmit a CPM if its significance index (CSI) is higher than the ISL or transmit a CPM regardless of its CSI if a message generation timer is expired.

4. A method according to claim 2, wherein for said explicit rate-based rule, said method is arranged to transmit a CPM with a generation rate determined based on its CSI, channel information significance level (ISL), and the congestion level of the channel.

5. A method according to claim 2, wherein for said priority-based rule, said method is arranged to compose a CPM by including detected objects with their respective OSIs in a way that the significance index (CSI) of the whole message is above the ISL.

6. A method according to claim 2, wherein for said staggered-based rule, said method is arranged to compose multiple streams of CPMs with respective generation rates determined based on their CSIs, channel information significance level (ISL), and the congestion level of the channel.

7. A method according to claim 2, wherein for said staggered rate-based rule, said method is arranged to transmit and receive a V2X message on different communication channels and/or on different communication media.

8. A method according to one of the preceding claims, wherein the step of determining a significance index (SI) of an object (OSI) includes:
detecting a plurality of objects present within a field of view (FOV) of at least one sensor provided at a respective intelligent transport system station (ITS-S) or included in a shared message received from another intelligent transport system station (ITS-S) as being present in the communication range of the station;
obtaining object data of each detected object from said at least one sensor and/or said shared message;
calculating the object significance index (OSI) for each detected object based on said object data.

9. A method according to claim 8, wherein the step of determining the significance index of an entire collective perception message (CSI) includes:
filling a collective perception message (CPM) with the objects in accordance with their calculated object significance index; and
calculating a collective perception message significance index (CSI) for each collective perception message (CPM) filled with objects.

10. A method according to one of the preceding claims, wherein the step of calculating the information significance level (ISL) comprises determining a local information significance level (ISL_L_0) on the channel from the CSI values for all received CPMs as a local zero-hop value by averaging the CSI values of all received CPMs within a predetermined time interval.

11. A method according to claim 10, wherein first and second hop information significance levels (ISL_L_1, ISL_L2) are calculated, wherein the first hop information significance level (ISL_L_1) is the highest received value calculated in a single-hop radius within the predetermined time interval from the local information significance level (ISL_L_0) and the second hop information significance level (ISL_L_2) is the highest received value calculated in a two-hop radius within the predetermined time interval from the first hop information significance level (ISL_L_1).

12. A method according to claim 11, wherein a global information significance level (ISL_G) is determined as ISL_G = max (ISL_L_0, ISL_L_1, ISL_L_2).

13. A method according to one of the preceding claims, wherein the ITS-S is a vehicle or a roadside unit (RSU).

14. A method according to one of the preceding claims, wherein the wireless communication is direct vehicle-to-x (V2X) communication.

15. A cooperative intelligent transport system for generating a V2X message based on the significance of information on a communication channel in a cooperative intelligent transport system (C-ITS) using a wireless communication channel for transmitting, receiving, processing and/or discarding a plurality of collective perception messages (CPMs) containing information about on-board sensors and/or objects detected by said on-board sensors within a traffic environment,
said cooperative intelligent transport system comprising:
a calculation unit arranged to calculate a significance index of an object (OSI) and/or a significance index of an entire collective perception message (CSI) based on the individual objects within a CPM, and calculate an information significance level (ISL) on the channel based on the CSI values for all received CPMs;
a determining unit arranged to determine at least one message generation rule based on the information significance level (ISL); and
a generating unit arranged to generate the V2X message based on said at least one message generation rule.

16. A computer-implemented system for generating a V2X message based on the significance of information on a communication channel in a cooperative intelligent transport system (C-ITS) using a wireless communication channel for transmitting, receiving, processing and/or discarding a plurality of collective perception messages (CPMs) containing information about on-board sensors and/or objects detected by said on-board sensors within a traffic environment,
said computer-implemented system comprising a memory for storing instructions which, when carried out by a processor, cause the processor to perform the steps of
determining a significance index of an object (OSI) and/or a significance index of an entire collective perception message (CSI) based on the individual objects within a CPM;
calculating an information significance level (ISL) on the channel based on the CSI values for all received CPMs;
determining at least one message generation rule based on the information significance level (ISL); and
generating the V2X message based on said at least one message generation rule.
